# EUROPÄISCHE PATENTANMELDUNG

(11) **EP 1 754 626 A2**
(43) Veröffentlichungstag der Anmeldung: **21.02.2007**
(21) Anmeldenummer: 06015138.8
(22) Anmeldetag: 20.07.2006
(51) Int. Cl.: B60P 1/44

(54) **Ladebordwand**

(30) Priorität: 17.08.2005 DE 202005013100 U; 30.09.2005 DE 202005015591 U
(71) Anmelder: Peter Maier Leichtbau GmbH, 78224 Singen (DE)
(72) Erfinder: Seussler, Jürgen, 78256 Steisslingen (DE)
(74) Vertreter: Weiss, Peter

(57) **Zusammenfassung**

Bei einer Ladebordwand mit einer absenkbaren Plattform mit integrierter Beleuchtung, soll in der Plattform, insbesondere in den Aussenkanten, ein Lichtblock (9) integriert sein.

## Beschreibung

Die Erfindung betrifft eine Ladebordwand mit einer absenkbaren Plattform mit integrierter Beleuchtung.

### Stand der Technik

Ladebordwände sind in vielfältiger Form und Ausführung bekannt und auf dem Markt. Es gibt bspw. feststehende Ladebordwände an entsprechenden Laderampen von bspw. Lagerhäusem. Die Mehrzahl der Ladebordwände wird jedoch an Fahrzeugen, insbesondere an Lastkraftwagen verwendet. In der Regel deckt die Ladebordwand einen Teil der Rückwand des Fahrzeuges ab und ist von dieser senkrechten Lage um 90° in eine horizontale Lage schwenkbar. Danach kann bspw. Ladegut auf die Plattform verfahren und mit der Plattform auf eine Ebene abgesenkt werden. Eine derartige Ladebordwand wird bspw. in der DE 203 02140 oder der DE 29914 648 beschrieben.

Heute müssen derartige Ladebordwände mit einer Beleuchtung versehen sein, die nicht nur nachts eine gewisse Sicherheit bietet. Auch tagsüber sind derartige Ladebordwände in der Regel mit der Warnblinkanlage des Fahrzeuges verbunden, so dass die Beleuchtung mit Einschalten der Warnblinkanlage ebenfalls wirksam wird. Eine derartige Beleuchtung ist in der DE 298 08 424 U gezeigt. Dabei befinden sich die entsprechenden Lichtquellen an den Aussenkanten bzw. Aussenflächen der Plattform selbst, so dass sie einem erhöhten Verschleiss unterliegen und deshalb durch entsprechende Gehäuse geschützt werden müssen.

### Aufgabe

Zur Aufgabe der vorliegenden Erfindung ist es, eine Ladebordwand der o. g. Art zu entwickeln, bei der die Beleuchtung wesentlich vereinfacht und verbessert ist, gleichzeitig jedoch ausreichend sowohl tags als auch nachts bietet.

### Lösung der Aufgabe

Zur Lösung der Aufgabe führt, dass in die Plattform, insbesondere in Aussenkanten, ein Lichtblock integriert ist.

Dieser Lichtblock kann beispielsweise quasi als selbstleuchtend ausgebildet werden, indem eine Lichtquelle von einem durchscheinenden Kunststoff umspritzt wird. Bei der Lichtquelle kann es sich beispielsweise um lichtemittierende Dioden (LED) handeln, die dabei gleichzeitig durch das Umspritzen miteinander verbunden werden. Der Kunststoffblock wird dann in die Aussenkante oder Aussenfläche der Plattform eingesetzt und leuchtet selbst, sobald die Lichtquellen angeschaltet werden.

Im Rahmen der Erfindung liegt, dass nur einem Lichtblock eine Lichtquelle zugeordnet wird, während andere Lichtblöcke über beispielsweise Lichtleiter mit diesem Lichtblock verbunden werden können.

Bei einem weiteren Ausführungsbeispiel der Erfindung soll der Plattform zumindest eine Lichtquelle zugeordnet sein, von welcher zumindest ein Lichtleiter zu Aussenkanten und/oder Aussenflächen der Plattform führt.

Die Lichtleitertechnik ist allgemein bekannt. Der Vorteil liegt darin, dass eine einzige Lichtquelle ausreicht, um eine Vielzahl von Lichtleitern zu bedienen, die an unterschiedlichster Stelle der Plattform nach aussen geführt werden können. Bei dem Lichtleiter handelt es sich in der Regel um Glasfaserkabel, jedoch sollen von der vorliegenden Erfindung alle bekannten Lichtleiter umfasst sein.

Die Erfindung hat den Vorteil, dass jetzt nicht mehr die Lichtquelle selbst nach aussen mündet, sondern der Lichtleiter. Da der Lichtleiter selbst relativ verschleissfest ist und zudem auch Beschädigungen seiner Endfläche nicht unbedingt zur Aufhebung seiner Lichtleistung führen, ist er gegenüber Angriffen von aussen relativ unempfindlich.

Um dies jedoch noch zu verbessern, ist erfindungsgemäss vorgesehen, dass der Lichtleiter in einem Kunststoffblock endet, der in eine entsprechende Aussenkante bzw. Aussenfläche der Ladebordwand eingeclipst werden kann. Bevorzugt sollte für diesen Kunststoffblock ein sehr verschleissfester Kunststoff gewählt werden, wie er unter dem Namen Grivory bekannt ist. Dabei handelt es sich um ein teilkristallines Copolyamid.

In einem Ausführungsbeispiel der Erfindung ist daran gedacht, zumindest einen Teil der Lichtleiter direkt auch mit der Lichtquelle der Warnblinkanlage eines Fahrzeuges zu verbinden. Da die Lichtquelle der Warnblinkanlage jedoch am Fahrzeug meist ortsfest ist, wäre es besser, einen Teil der Beleuchtung der Ladebordwand nur über entsprechende Kabel mit dem Stromkreis der Warnblinkanlage zu verbinden, für den Rest jedoch eine eigene Lichtquelle in der Ladebordwand vorzusehen. Fällt dann diese eigene Lichtquelle aus, so kann die Warnblinkanlage des Fahrzeuges hilfsweise noch eine Warnfunktion an der Ladebordwand erfüllen.

### Figurenbeschreibung

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
Figur 1 eine Seitenansicht eines Fahrzeuges mit ausgeklappter Ladebordwand; und
Figur 2 eine Draufsicht auf eine erfindungsgemässe Ladebordwand.

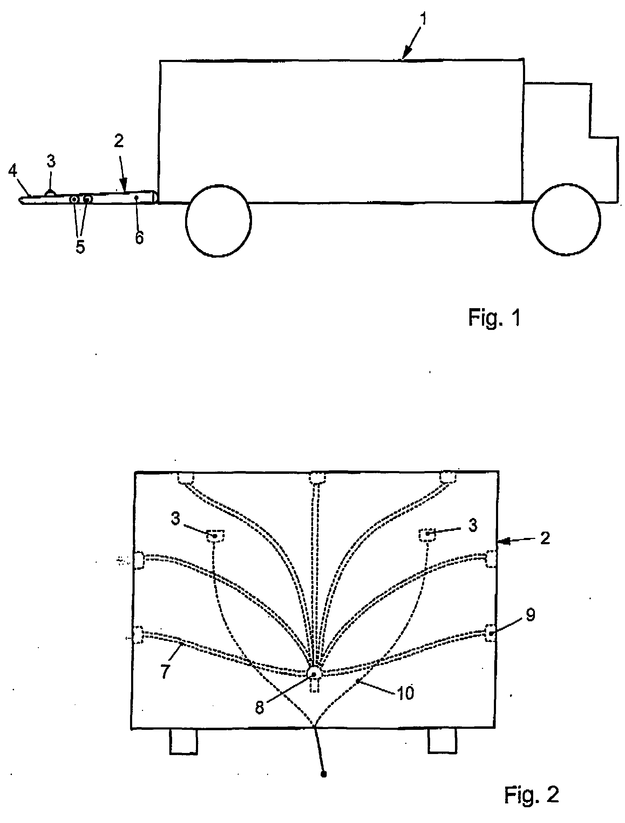

Gemäss Figur 1 befindet sich an der Rückseite eines Fahrzeuges 1 eine abklappbare sowie absenkbare Ladebordwand 2. Diese Ladebordwand 2 weist eine Beleuchtung auf, die aus Lichtaustritten 3 auf einer Oberfläche 4 und Lichtaustritten 5 an Seitenkanten 6 der Ladebordwand 2 besteht.

In Figur 2 ist angedeutet, dass zu den einzelnen Lichtaustritten 3 und 5 jeweils Lichtleiter 7 führen, die im Inneren der Ladebordwand 2 einer Lichtquelle 8 zugeordnet sind. Beispielsweise bestehen diese Lichtleiter 7 aus einem Glasfaserkabel. Fern der Lichtquelle 8 ist vorgesehen, dass die Lichtleiter 7 in einen Kunststoffblock 9 einmünden, in dem sich auch der Lichtaustritt 5 befindet. Dieser Kunststoffblock 9 ist bevorzugt aus einem sehr verschleissfesten Kunststoff hergestellt, wie er bspw. unter dem Handelsnamen Grivory bekannt ist. Bei diesem Kunststoff handelt es sich um ein teilkristallines Copolyamid.

Zur Sicherheit können bspw. die Lichtaustritte 3 auf der Oberfläche 4 der Ladebordwand 2 über entsprechende Kabel 10 noch mit der Warnblinkanlage des Fahrzeuges verbunden sein, so dass eine Beleuchtung der Ladebordwand 2 auch beim Ausfall der Lichtquelle 8 immer gewährleistet ist.

### Bezugszeichenliste

| | | | | | |
|---|---|---|---|---|---|
| 1 | Fahrzeug | 34 | | 67 | |
| 2 | Ladebordwand | 35 | | 68 | |
| 3 | Lichtaustritt | 36 | | 69 | |
| 4 | Oberfläche | 37 | | 70 | |
| 5 | Lichtaustritt | 38 | | 71 | |
| 6 | Seitenkante | 39 | | 72 | |
| 7 | Lichtleiter | 40 | | 73 | |
| 8 | Lichtquelle | 41 | | 74 | |
| 9 | Kunststoffblock | 42 | | 75 | |
| 10 | Kabel | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Ladebordwand mit einer absenkbaren Plattform mit integrierter Beleuchtung,
**dadurch gekennzeichnet,**
**dass** in die Plattform, insbesondere in Aussenkanten, ein Lichtblock (9) integriert ist.

2. Ladebordwand nach Anspruch 1, **dadurch gekennzeichnet, dass** zumindest in einem Lichtblock (9) eine Lichtquelle integriert, insbesondere umspritzt eingebettet ist.

3. Ladebordwand nach Anspruch 2, **dadurch gekennzeichnet, dass** zumindest zwei Lichtblöcke (9) über einen Lichtleiter (7) miteinander verbunden sind.

4. Ladebordwand nach einem der Ansprüche 1 bis 3, **dadurch gekennzeichnet, dass** der Plattform zumindest eine Lichtquelle (8) zugeordnet ist, von welcher zumindest ein Lichtleiter (7) zu einem Lichtblock führt.

5. Ladebordwand nach Anspruch 4, **dadurch gekennzeichnet, dass** der Lichtleiter (7) mit seinem der Lichtquelle (8) fernen Ende in einen verschleissfesten Kunststoffblock (9) eingesetzt ist.

6. Ladebordwand nach Anspruch 4 oder 5, **dadurch gekennzeichnet, dass** der Lichtleiter (7) direkt mit einer Lichtquelle der Warnblinkanlage eines Fahrzeuges (1) verbunden ist.

7. Ladebordwand nach wenigstens einem der Ansprüche 2 bis 6, **dadurch gekennzeichnet, dass** die Lichtquelle zumindest eine LED ist.

8. Verwendung von zumindest einem Lichtleiter (7) zur Beleuchtung einer Ladebordwand (2), bevorzugt an einem Fahrzeug (1).
